# EUROPÄISCHE PATENTSCHRIFT

(11) **EP 3 588 042 B1**
(45) Veröffentlichungstag und Bekanntmachung des Hinweises auf die Patenterteilung: **31.03.2021**
(21) Anmeldenummer: 18179311.8
(22) Anmeldetag: 22.06.2018
(51) Int. Cl.: G01L 9/00, H01H 35/34, G01L 19/12

(54) **DRUCKELEMENT**
PRESSURE ELEMENT
ÉLÉMENT DE PRESSION

(43) Veröffentlichungstag der Anmeldung: 01.01.2020
(73) Patentinhaber: Siemens Aktiengesellschaft, 80333 München (DE)
(72) Erfinder: Klehr, Stefan, 76764 Rheinzabern (DE)

(56) Entgegenhaltungen:
- US-A- 5 132 500

## Beschreibung

Die Erfindung betrifft ein Druckstoßtaster nach Anspruch 1. Zudem betrifft die Erfindung eine Rohrleitung, die von einem Fluid durchströmbar ist, nach Anspruch 13. Außerdem betrifft die Erfindung eine Druckstoßdetektionseinheit nach Anspruch 14, ein Druckstoßüberwachungssystem für fluiddurchströmbare Rohrleitungen nach Anspruch 15 und die Verwendung wenigstens eines Druckelementes nach Anspruch 16.

In Rohrleitungsnetzen, wie beispielsweise im Bereich der Trinkwasserversorgung, besteht die Gefahr von Rohrbrüchen aufgrund von Druckstößen, die aufgrund der Fluiddynamik entstehen können. Diese Problematik tritt vergleichsweise häufig auf, so dass Trinkwasserversorgungsunternehmen ein besonderes Interesse haben, Druckstoßereignisse zu detektieren und insbesondere einen möglichen Rohrbruch zu lokalisieren.

Um Druckstöße zu vermeiden oder wenigstens deren Intensität abzuschwächen, ist es bekannt, an verschiedenen Stellen im Rohrleitungsnetz sogenannte mechanische Wasserschlagdämpfer einzusetzen. Beispielsweise offenbaren die DE 617 502 C oder die EP 0 507 705 A1 derartige Vorrichtungen. Die Wasserschlagdämpfer können Druckstöße zwar dämpfen, jedoch können sie keine Informationen über die Druckstoßereignisse bereitstellen.

Um die schädlichen Auswirkungen der Druckstöße zu begrenzen, können im Rahmen der Planung und des Aufbaus von Rohrleitungsnetzen vorher berechnete Parameter hinsichtlich Materialauswahl und Wandstärke der Rohrleitungen berücksichtigt werden, um Rohrbrüchen vorzubeugen. Diese Vorgehensweise ist in den meisten Fällen jedoch nicht praktikabel, zumal Alterungsprozesse wie Korrosion hierbei unberücksichtigt bleiben.

Es ist auch möglich, Drucksensoren im Rohrleitungsnetz zu verteilen und so die Druckzustände kontinuierlich zu überwachen. Aufgrund der hierfür erforderlichen kontinuierlichen Druckmessung muss für jede Messstelle eine adäquate Energieversorgung bereitgestellt werden, was bei der beträchtlichen Länge von Rohrleitungsnetzen (speziell im Trinkwasserversorgungsbereich) einen hohen Energie- und Materialaufwand mit sich bringen würde. Eine Batterielösung wäre hierbei nicht praktikabel.

In der DE 7 040 823 U und in der DE 6 911 897 U ist jeweils ein Druckschalter mit Schaltpunkteinstellung zur Erfassung eines Druckwerts eines Fluids offenbart.

Auch in der DE 582 011 A ist ein Druckschalter offenbart, der bei Überschreiten eines gewissen Druckschwellwertes eines Fluids einen elektrischen Kontakt schließt, um beispielsweise den Kühlvorgang eines Kühlschranks zu unterbrechen.

Ein weiteres für die Erfindung relevantes Dokument des Standes der Technik ist das Patent US 5 132 500 A. Das Patent offenbart einen Differenzdruckschalter mit abgedichteten Kontakten. Das Dokument offenbart jedoch nicht die Messung plötzlicher Druckänderungen eines Fluids gegen sich selbst mittels zweier Kammern, die durch eine Membran getrennt sind, die für dasselbe Fluid durch Öffnungen mit unterschiedlichem Fluidwiderstand zugänglich sind.

Der Erfindung liegt die Aufgabe zugrunde, eine Vorrichtung anzugeben, die eine aufwandsarme Erkennung von Druckänderungen ermöglicht, die in einem Fluid auftreten können.

Diese Aufgabe wird gelöst durch einen Druckstoßtaster zur Überwachung eines das Druckelement beaufschlagenden Fluids nach Anspruch 1.

Außerdem wird die Aufgabe gelöst durch eine Rohrleitung, die von einem Fluid durchströmbar ist, nach Anspruch 13.

Zudem wird die Aufgabe gelöst durch eine Druckstoßdetektionseinheit nach Anspruch 14, durch ein Druckstoßüberwachungssystem für fluiddurchströmbare Rohrleitungen nach Anspruch 15 und durch die Verwendung wenigstens eines Druckelements nach Anspruch 16. Vorteilhafte Weiterbildungen ergeben sich aus den abhängigen Ansprüchen.

Das Druckelement der eingangs beschriebenen Art ist erfindungsgemäß dazu ausgebildet, einen elektrischen Schaltkreis bedingt durch eine Änderung eines Drucks, den das Fluid auf das Druckelement ausübt unabhängig von einem Absolutwert des Drucks zu schließen, wobei das Fluid vorzugsweise durch eine Rohrleitung strömt.

Mit anderen Worten ist das Druckelement derart ausgebildet, dass es auf einen Anstieg und/oder einen Abfall des Drucks, den das Fluid aufweist, reagiert und einen elektrischen Schaltkreis schließt. Das Druckelement kann dabei als Schalter oder als Taster fungieren. Je nach Topologie des elektrischen Schaltkreises kann das Druckelement den elektrischen Schaltkreis auch öffnen, um eine vergleichbare Reaktion zu bewirken. Wesentlich ist nur, dass eine messbare, mit nachfolgenden Komponenten erfassbare Reaktion erfolgt.

Wesentlich ist, dass ein Absolutwert des Fluiddrucks keinen Einfluss auf die Funktion des Druckelements hat - mit Ausnahme eines Maximaldruckwerts, bei dessen Überschreiten das Druckelement zerstört werden würde. Ein bedeutender Vorteil des Druckelements ist die Unabhängigkeit von einer Absoluthöhe des Drucks, unter dem das Fluid steht (der sogenannte statische Druck). Dadurch lässt sich das erfindungsgemäße Druckelement mit beliebigen Rohrleitungen kombinieren, um darin auftretende Druckänderungen, insbesondere Druckstöße, zu detektieren.

Bevorzugt wird das wenigstens eine Druckelement zur Überwachung einer fluiddurchströmten Rohrleitung verwendet.

Bevorzugt ist das Druckelement dazu ausgebildet, den elektrischen Schaltkreis automatisch bei Auftreten der Druckänderung in der Rohrleitung ohne Zuhilfenahme einer externen, insbesondere elektrischen Energiequelle zu schließen. Das Druckelement fungiert bei dieser Weiterbildung der Erfindung rein mechanisch. Druckänderungen des Fluids in der Rohrleitung können daher detektiert werden, ohne dass hierfür eine (kabelgebundene oder batteriebasierende) elektrische Energieversorgung notwendig wäre. Auch wird keine anders geartete externe Energiequelle (z.B. mechanischer Art) für die Funktionalität des Druckelements benötigt. Die für die Funktionalität des Druckelements benötigte Energie wird ausschließlich durch eine Druckänderung des Fluids in der Rohrleitung zur Verfügung gestellt.

Besonders bevorzugt ist das Druckelement dazu ausgebildet, den elektrischen Schaltkreis bei Überschreiten eines betragsmäßigen Schwellwertes der Druckänderung des Fluids in der Rohrleitung zu schließen. Mit anderen Worten schließt das Druckelement den elektrischen Schaltkreis, wenn eine bestimmte Druckänderungsrate betragsmäßig überschritten wird. Bei kleinen Druckänderungsraten (unterhalb des Schwellwerts), d.h. bei langsamen Druckänderungen, reagiert das Druckelement nicht mit einer Schließung des elektrischen Schaltkreises. Dies bedeutet aber nicht, dass das Druckelement insgesamt gesehen überhaupt keine Reaktion auf die Druckänderungen zeigt. Durch eine entsprechende Dimensionierung von Parametern des Druckelements wie "Auslöseschwelle", "Ansprechdynamik" und dergleichen kann ein breites Spektrum an möglichen Anwendungsgebieten abgedeckt werden.

Bei einer vorteilhaften Weiterbildung der Erfindung weist das Druckelement wenigstens eine flexible Membran auf, die wiederum eine Verbindung zu einem Schaltelement aufweist. Die Verbindung zwischen flexibler Membran und dem Schaltelement ist derart ausgebildet, dass eine Bewegung bzw. Auslenkung der Membran unmittelbar oder mittelbar zu einer Bewegung des Schaltelements führt, um bei einer entsprechenden Bewegung bzw. Auslenkung der Membran den elektrischen Schaltkreis zu schließen. Bei der Membran handelt es sich um ein flexibles Element, das bei Beaufschlagen einer ersten Außenseite mit einem Druck mit einer Ausgleichbewegung in die Richtung der Druckwirkung reagiert. Gleichzeitig ist die Membran, solange sie keine Öffnung oder dergleichen aufweist, undurchlässig für Fluide. Die Kombination aus Membran und damit verbundenem Schaltelement ermöglicht einen besonders einfachen Schließvorgang des elektrischen Schaltkreises.

Im Rahmen einer Weiterentwicklung weist das Druckelement wenigstens zwei Membranen auf: Eine erste Membran und eine zweite Membran. Die erste Membran weist eine Verbindung zu einem ersten Schaltelement auf. Diese Verbindung ist derart ausgebildet, dass aufgrund einer positiven Druckänderung in der Rohrleitung die erste Membran und das erste Schaltelement derart bewegt werden, dass der elektrische Schaltkreis geschlossen wird. Entsprechend weist die zweite Membran eine Verbindung zu einem zweiten Schaltelement auf, derart, dass aufgrund einer negativen Druckänderung in der Rohrleitung die zweite Membran und das zweite Schaltelement derart bewegt werden, dass der elektrische Schaltkreis geschlossen wird.

Durch die zuvor beschriebene Weiterentwicklung der Erfindung können sowohl negative Druckänderungen des Fluiddrucks besonders einfach mittels des Druckelements detektiert werden.

Bevorzugt umfasst das Druckelement eine Überlastvorrichtung, die dazu ausgebildet ist, eine übermäßige mechanische Belastung auf die wenigstens eine Membran zu verhindern. Dabei kann eine Auslenkung der Membran durch eine konstruktive Maßnahme derart begrenzt werden, dass die Membran selbst bei übermäßig hohen Druckänderungsraten nicht zu Schaden kommt. Durch den Einsatz der Überlastvorrichtung kann die Membran zudem vergleichsweise dünn ausgelegt werden, was die Detektion von sehr geringen Druckänderungsraten ermöglichen kann.

Das Druckelement kann wenigstens eine erste Kammer und eine zweite Kammer aufweisen, wobei die Membran und das Schaltelement in einem mittleren Bereich zwischen den beiden Kammern angeordnet sind. Die Membran muss dabei nicht notwendigerweise die beiden Kammern vollständig voneinander trennen. Vielmehr kann auch eine direkte Öffnung zwischen beiden Kammern vorgesehen sein. Die Membran selbst kann auch eine Öffnung zur Durchströmung mit einem Fluid aufweisen.

Vorzugsweise weist das Druckelement eine zusätzliche dritte Kammer auf, die eine erste Öffnung zu der ersten Kammer und eine zweite Öffnung zu der zweiten Kammer aufweist, wobei die beiden Öffnungen einen sich voneinander unterscheidenden Öffnungsquerschnitt aufzuweisen. Mittels der unterschiedlichen Öffnungen lassen sich bei Auftreten von Druckänderungen des Fluids in der Rohrleitung gezielt verschiedene Druckverhältnisse zwischen der ersten und der zweiten Kammer schaffen, um eine Bewegung der wenigstens einen Membran zu induzieren, die schließlich zu einer Schließung des elektrischen Schaltkreises führen kann (bei geeigneter Druckänderungsrate des Fluids). Für nähere Erläuterungen hierzu sei auf die Beschreibung der Ausführungsbeispiele verwiesen.

In der ersten Kammer ist bevorzugt eine kompressible Verformeinrichtung angeordnet, die dazu ausgebildet ist, ihr Volumen abhängig von einem auf sie ausgeübten Druck reversibel zu ändern. Mithilfe dieser Verformeinrichtung lassen sich Druckdifferenzen zwischen der ersten und zweiten Kammer realisieren, damit die wenigstens eine Membran sich bewegen kann, um zusammen mit dem Schaltelement den elektrischen Schaltkreis zu schließen. Die Verformeinrichtung ist hermetisch gegen die beiden Kammern abgedichtet und ist mechanisch verformbar. Ihre Größe hängt von den Spezifikationen des Druckelements ab.

Die kompressible Verformeinrichtung kann ein Verformkörper sein, der mit Luft oder einem Gas gefüllt ist und ballonartig ausgebildet ist.

Alternativ weist die kompressible Verformeinrichtung eine von der ersten Kammer aus Strömungssicht getrennte Teilkammer auf, die eine Feder und einen Kolben umfasst. Dabei ist der Kolben dazu ausgebildet und vorgesehen, bei einem auf ihn ausgeübten Druck eine Kraft auf die Feder auszuüben, so dass das Volumen der Teilkammer und damit der gesamten Verformeinrichtung reversibel verändert wird.

Die kompressible Verformeinrichtung kann auch eine Balgstruktur sein, die bei einer Druckänderung des das Druckelement beaufschlagenden Fluids reversibel komprimierbar ist. Vorzugsweise wird die Balgstruktur dabei bei einer positiven Druckänderung des das Druckelement umgebenden Fluids zusammengedrückt wird und bei einer negativen Druckänderung des Fluids auseinandergezogen.

Bei einer vorteilhaften Weiterbildung der Erfindung weist das Druckelement eine flexible Trennmembran auf, die derart ausgebildet ist, dass eine erste Seite der Trennmembran mit dem Fluid beaufschlagbar ist, und eine zweite Seite der Trennmembran mit einem innerhalb des Druckelements befindlichen Fluid beaufschlagt ist.

Wenn ein von außen das Druckelement beaufschlagendes Fluid in das Druckelement selbst gelangen kann, kann es zu Totvolumen kommen, in denen Krankheitskeime entstehen können, die beispielsweise zu einer Verunreinigung des Fluids führen können. Zudem können von dem Fluid transportierte Festkörperartikel in das Druckelement gelangen, wodurch Ablagerungen entstehen können, die zu einer Beeinträchtigung der Funktionsweise des Druckelements führen können. Mittels der zusätzlichen flexiblen Trennmembran lassen sich diese Probleme sehr effizient und einfach lösen, ohne dass die Funktionalität des Druckelements beeinträchtigt werden würde.

Die zuvor erläuterte Aufgabe wird gleichfalls von einer Rohrleitung gelöst, die von einem Fluid durchströmbar ist, und die wenigstens ein mit der Rohrleitung verbundenes Druckelement gemäß den vorstehenden Erläuterungen aufweist.

Auch wird die Aufgabe von einer Druckstoßdetektionseinheit gelöst. Diese umfasst ein Druckelement gemäß den vorstehenden Erläuterungen und eine Steuereinheit, die zu einer Erfassung einer Schließung des elektrischen Schaltkreises des Druckelements ausgebildet und vorgesehen ist. Dabei ist die Steuereinheit vorteilhafterweise so ausgebildet, dass sie erst dann eine elektrische Energie benötigt, wenn der elektrische Schaltkreis auch geschlossen ist. Dies ermöglicht einen minimalen Energieverbrauch der Druckstoßdetektionseinheit und ein breites Anwendungsspektrum.

Die Steuereinheit kann zusätzlich zu der Detektion der Druckänderung einen exakten Zeitstempel des Änderungsereignisses zur Verfügung stellen und Sensoren zur Erfassung von Temperatur, (absolutem) Druck, Feuchte, Vibration, Helligkeit und dergleichen aufweisen.

Die zuvor erläuterte Aufgabe wird zudem von Druckstoßüberwachungssystem für fluiddurchströmbare Rohrleitungen gelöst. Das Druckstoßüberwachungssystem umfasst eine Mehrzahl an Druckelementen gemäß den vorstehenden Erläuterungen und wenigstens eine Steuereinheit, die zu einer Erfassung einer Schließung des elektrischen Schaltkreises des Druckelements ausgebildet und vorgesehen ist. Mithilfe der Mehrzahl an Druckelementen, die vorteilhafterweise innerhalb der fluiddurchströmbaren Rohrleitung verteilt angeordnet sind, lässt sich eine Ausbreitung von Druckänderungen des Fluids innerhalb der Rohrleitung nachvollziehen. Dadurch können Rückschlüsse auf den Ursprungsort einer Druckänderung gezogen werden. Beispielsweise kann mithilfe des erfindungsgemäßen Druckstoßüberwachungssystems ein etwaiger Rohrbruch in der Rohrleitung einfach und schnell lokalisiert werden, um entsprechende Maßnahmen frühzeitig und gezielt einleiten zu können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert wird. Es zeigen:
- FIG 1: ein Schnittbild eines erfindungsgemäßen Druckelements in einer ersten Ausführungsform;
- FIG 2: ein Schnittbild eines erfindungsgemäßen Druckelements in einer zweiten Ausführungsform;
- FIG 3: ein Schnittbild eines erfindungsgemäßen Druckelements in einer dritten Ausführungsform;
- FIG 4: ein Schnittbild eines erfindungsgemäßen Druckelements in einer vierten Ausführungsform;
- FIG 5: ein zweites Schnittbild der Ausführungsform gemäß FIG 4;
- FIG 6: eine Membran mit einem dazugehörigen Schaltelement für ein erfindungsgemäßes Druckelement;
- FIG 7: eine Detailvergrößerung von FIG 6; und
- FIG 8: eine erfindungsgemäße Rohrleitung.

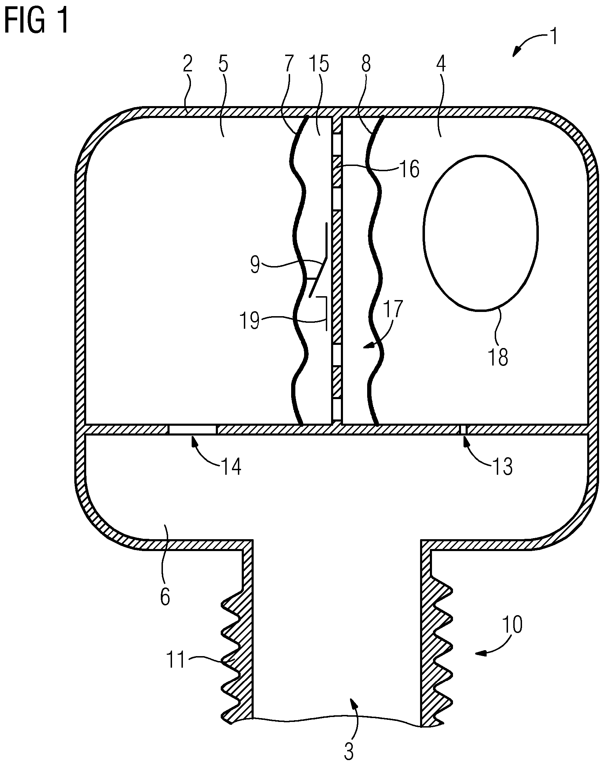

FIG 1 zeigt ein Ablaufdiagramm eines erfindungsgemäßen Druckelements 1, das als Druckstoßtaster 1 ausgebildet ist. Der Druckstoßtaster 1 weist ein Gehäuse 2 aus einem robusten, druckfesten Material auf. In dem Gehäuse 2 befindet sich eine Öffnung 3, durch die ein Fluid in ein Inneres des Gehäuses 2 strömen kann. Weiterhin umfasst der Druckstoßtaster 1 eine erste Kammer 4, eine zweite Kammer 5 und eine dritte Kammer 6. Zudem weist der Druckstoßtaster 1 eine erste Membran 7, eine zweite Membran 8 sowie ein Schaltelement 9 auf.

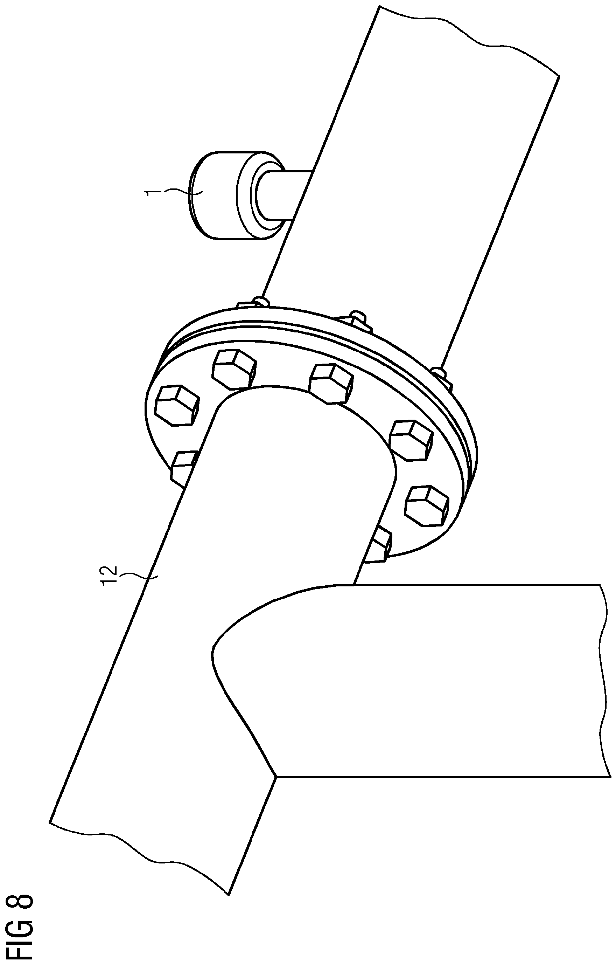

Eine die Öffnung 3 des Gehäuses 2 umgebende Außenwand 10 weist ein Gewinde 11 auf, mittels dessen der Druckstoßtaster 1 beispielsweise mit einer Rohrleitung 12 (nicht dargestellt, vergleiche FIG 8) fluidisch verbunden werden kann. Die drei Kammern 4, 5, 6 sind mit dem von außen in den Druckstoßtaster 1 strömenden Fluid (z.B. Wasser aus der Rohrleitung 12) gefüllt und stehen unter demselben Fluiddruck. Die erste Kammer 4 und die dritte Kammer 6 sind über eine erste Öffnung 13 miteinander verbunden. Die zweite Kammer 5 und die dritte Kammer 6 sind über eine zweite Öffnung 14 miteinander verbunden . Bei einer Druckänderung eines das Druckelement 1 beaufschlagenden Fluids treten durch diese Öffnungen 13, 14 im weiteren Verlauf näher erläuterte Druckausgleichsströmungen auf. Ein Strömungsquerschnitt der ersten Öffnung 13 ist kleiner als ein Strömungsquerschnitt der zweiten Öffnung 14.

Zwischen der ersten Kammer 4 und der zweiten Kammer 5 sind die beiden Membranen 7, 8 angeordnet, die beide Kammern 4, 5 voneinander fluidisch trennen, d.h. es kann kein Fluid direkt (ohne Umweg über die dritte Kammer 6) zwischen den beiden Kammern 4, 5 fließen. Die beiden Membranen 7, 8 sind beabstandet voneinander angeordnet und umschließen eine vierte Kammer 15, die beispielsweise mit einem Silikon-Öl gefüllt ist.

In der vierten Kammer 15 befindet sich ein Steg 16, der mit dem das als Taster 9 ausgebildeten Schaltelement 9 in Verbindung steht. Der Steg 16 ist aufgrund von darin eingelassenen Öffnungen 17 (gestrichelt dargestellt) durchlässig für das Silikon-Öl. Der Taster 9 ist mechanisch mit der ersten Membran 7 so verbunden, dass bei einer Membranbewegung zum Taster 9 hin bei Überschreiten einer bestimmten (Schalt-)Schwelle (bedingt durch eine entsprechende Änderungsrate des Fluiddrucks) einen auf dem Steg 16 angeordneten elektrischen Schaltkreis 19 geschlossen wird. Die vierte Kammer 15 zwischen den Membranen 7, 8 ist mit einer elektrisch isolierenden Flüssigkeit gefüllt und damit neutral gegenüber den darin befindlichen elektrischen Bauelementen. Mittels in FIG 1 nicht gezeigter elektrischer Durchkontaktierungen durch das Gehäuse 2 werden die elektrischen Anschlüsse nach außen geführt.

Bewegt sich die erste Membran 7 weg von dem Taster 9, wird der elektrische Schaltkreis 19 bei Unterschreiten der Schaltschwelle (inkl. Schalthysterese) wieder unterbrochen bzw. geöffnet. Durch konstruktive Maßnahmen kann die erste Membran 7 bei einer übermäßig starken Auslenkung mit einem Überlastbett in ihrer Auslenkung gehindert werden, so dass diese nicht beschädigt werden kann. Dies ermöglicht den Einsatz einer relativ dünnen ersten Membran 7, so dass auch Schaltschwellen bei kleineren Druckänderungsraten möglich sind.

Die erste Membran 7 und die zweite Membran 8 unterliegen systembedingt keinerlei statischem Differenzdruck, was dünne Membranen 7, 8 möglich macht.

In der ersten Kammer 4 befindet sich eine als kompressibler Verformkörper 18 ausgebildete Verformeinrichtung 18, die bei einer Druckänderung innerhalb der ersten Kammer 4 eine entsprechende Volumenänderung erfährt. Der Verformkörper 18 ist hermetisch dicht und kann mit Luft oder Gas gefüllt sein. Dabei ist er mechanisch verformbar und hat eine entsprechend den Anforderungen definierte Größe.

Im Folgenden wird die Funktion des Druckelements 1 erläutert: Bei einem schnellem Druckanstieg des die Öffnung 3 beaufschlagenden Fluids (d.h. bei einer vergleichsweise hohen Änderungsrate) kann durch die kleinere erste Öffnung 13 während des Druckanstiegs nur eine geringe Menge an Fluid strömen, so dass ein Druckausgleich über die größere zweite Öffnung 14 erfolgt. Die Membranen 7, 8 werden durch den Unterdruck in der ersten Kammer 4 bzw. den Überdruck in der zweiten Kammer 5 in Richtung der ersten Kammer 4 ausgelenkt und schließen dabei den elektrischen Schaltkreis 19. Der kompressible Verformkörper 18 wird dabei komprimiert und sorgt dafür, dass überhaupt Druckdifferenzen zwischen der ersten und zweiten Kammer 4, 5 auftreten können.

Nach dem Druckanstiegsereignis (Fluiddruck ist wieder konstant oder ändert sich nur noch langsam) strömt durch die erste Öffnung 13 solange Fluid nach, bis die Membranen 7, 8 bedingt durch ihre Rückstellkräfte wieder in ihrem Grundzustand sind. Der elektrische Schaltkreis 19 ist wieder unterbrochen bzw. geöffnet.

Bei einem entsprechend schnellen Druckabfall des Fluids führt derselbe Wirkmechanismus dazu, dass sich die Membranen 7, 8 in Richtung der zweiten Kammer 5 bewegen. Ein (weiterer oder alternativer) Taster (in FIG 1 nicht gezeigt) auf der (in der Zeichenebene von FIG 1) rechten Seite des Stegs 16 schließt entsprechend bei einer ausreichend hohen negativen Druckänderungsrate den elektrische Schaltkreis 19, der identisch sein kann mit dem elektrischen Schaltkreis 19, den der erste Taster 9 schließt, was jedoch nicht zwingend der Fall sein muss. Auch hier findet über die erste Öffnung 13 eine langsame Ausgleichsströmung statt, bis sich die Membranen 7, 8 wieder in ihrer Ruhelage befinden. Die Schaltschwelle und die Hysterese des Druckelements 1 sind durch entsprechende Parametrierung u.a. der Öffnungen 13, 14 sowie des Verformkörpers 18, der Membranen 7, 8 und der Kammern 4, 5, 6, 15 einstellbar.

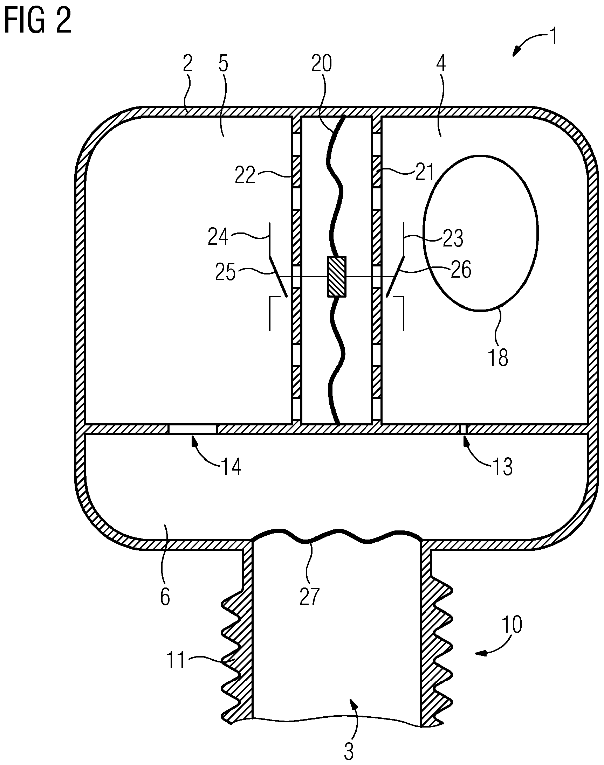

FIG 2 zeigt eine zweite Ausführungsform eines erfindungsgemäßen Druckelements 1. Der Wirkmechanismus der zweiten Ausführungsform ist derselbe wie zuvor beschrieben. Das Druckelement 1 umfasst jedoch im Gegensatz zu dem Druckelement 1 aus FIG 1 nur eine Membran 20. Die erste Kammer 4, die zweite Kammer 5 und die dritte Kammer 6 sind vollständig mit einem Fluid (z.B. Silikon-Öl) gefüllt. Alle mechanischen Komponenten des Druckelements 1 befinden sich in dem Silikon-Öl. Das Druckelement weist zwei Stege 21, 22 auf, von denen jeweils einer in der ersten Kammer 4 und in der zweiten Kammer 5 angeordnet ist. Sie fungieren als Anschlagmechanismus und somit als Überlastvorrichtung für die Membran 20.

An den Stegen 21, 22 ist jeweils ein Taster 23, 24 angebracht. Die Taster 23, 24 sind über eine mechanische Verbindung mit der Membran 20 verbunden. Eine Auslenkung der Membran 20 nach links (abfallender Fluiddruck) schließt einen elektrischen Stromkreis 25 in der zweiten Kammer 5, eine Auslenkung der Membran 20 nach rechts (steigender Fluiddruck) schließt einen elektrischen Stromkreis 26 in der ersten Kammer 4. Somit kann mittels eines einzigen Elements 1 ein bidirektionales Druckänderungs-Ereignis detektiert werden.

Im Gegensatz zu der Ausführungsform der Erfindung gemäß FIG 1 trennt bei der zweiten Ausführungsform eine die Öffnung 3 verschließende Trennmembran 27 das Innere des Druckelements 1 von dem außen befindlichen Fluid. Dadurch entsteht kein Totvolumen innerhalb des Druckelements 1 und das partikelfreie Fluid im Inneren des Druckelements 1 kann insbesondere die erste (kleinere) Öffnung 13 nicht verstopfen.

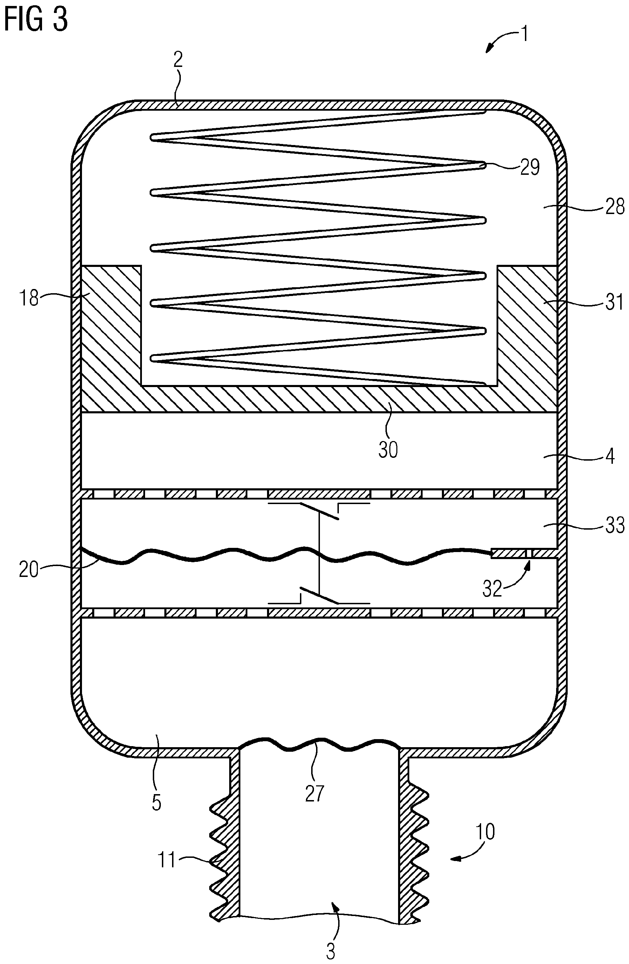

In FIG 3 ist eine dritte Ausführungsform eines erfindungsgemäßen Druckelements 1 dargestellt. Das Wirkprinzip des Druckelements 1 gleicht dem der zuvor erläuterten Ausführungsformen (Figuren 1, 2). Das Druckelement 1 umfasst nur eine erste Kammer 4 und eine zweite Kammer 5. Die kompressible Verformeinrichtung 18 weist eine von der ersten Kammer 4 aus Strömungssicht getrennte Teilkammer 28 auf, die eine Feder 29 und einen Kolben 30 umfasst. Doppelte O-Ring Dichtungen 31 dichten die Teilkammer 28 gegen die erste Kammer 4. Die Teilkammer 28 enthält ein komprimierbares Gas. Die erste Kammer 4 und die zweite Kammer 5 sind wie in FIG 2 komplett mit z.B. Silikon-Öl gefüllt.

Der Kolben 30 ist dazu ausgebildet und vorgesehen, bei einem auf ihn ausgeübten Druck (d.h. wenn der Druck in der ersten Kammer 4 steigt oder fällt) eine Kraft auf die Feder 29 auszuüben, so dass das Volumen der Teilkammer 28 und damit der gesamten Verformeinrichtung 18 verändert wird. Die Funktion entspricht dem Verformkörper 18 gemäß den Figuren 1 und 2.

Eine einzige Membran 20 trennt die erste Kammer 4 von der zweiten Kammer 5. Beide Kammern 4, 5 sind jedoch über einen vergleichsweise engen Kanal 32, welcher in eine Trennwand 33 eingelassen ist, miteinander verbunden. Dadurch kann das Silikon-Öl bei einer Ausgleichsströmung (bei einer Druckänderung) einen definierten Strömungswiderstand erfahren.

In diesem Ausführungsbeispiel ist die Membran 20 "relativ weich" und wird auch bei Überlast nicht beschädigt, so dass ein mechanischer Anschlag als Schutz nicht notwendig ist. Die Trennmembran 27 trennt auch hier, wie bereits beschrieben, die Silikon-Öl Füllung von dem außen befindlichen Fluid.

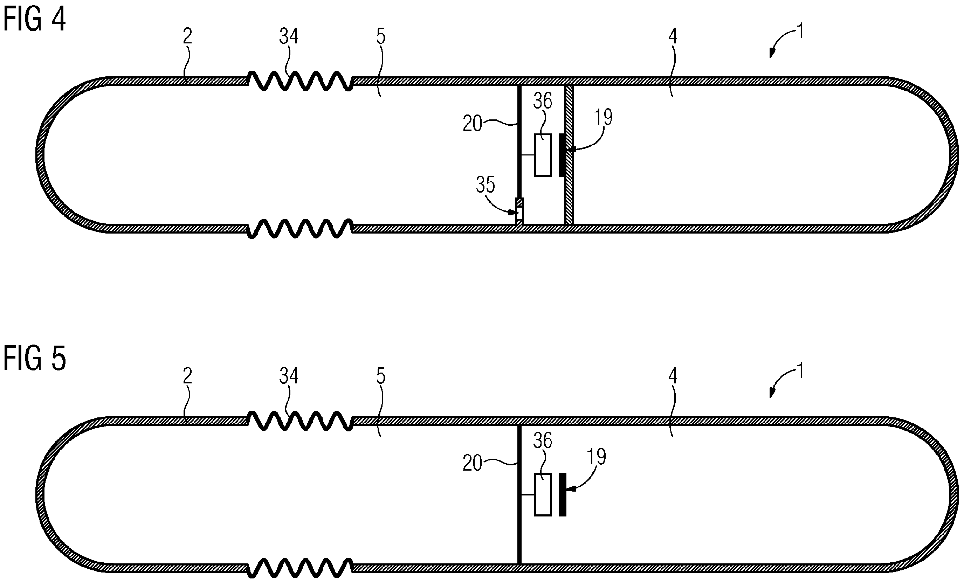

FIG 4 veranschaulicht ein viertes Ausführungsbeispiel des erfindungsgemäßen Druckelements 1. Das Druckelement 1 weist ein ovales Gehäuse 2 auf, das nach außen hin hermetisch dicht ist. Das Gehäuse 2 ist druckstabil ausgebildet. Ein Teil des Gehäuses 2 ist jedoch als Balgstruktur 34 ausgebildet, die sich zusammenziehen und ausdehnen kann. Die Balgstruktur 34 fungiert als Verformeinrichtung 18, die eine vergleichbare Funktion wie der kompressible Verformkörper erfüllt (vgl. Figuren 1 bis 3). Das Druckelement 1 weist eine erste Kammer 4 und eine zweite Kammer 5 auf. Beide Kammern 4, 5 sind mit einem Fluid (z.B. einem Gas oder gewöhnlicher Luft) gefüllt. Zwischen beiden Kammern 4, 5 ist eine flexible (für das Fluid im Inneren des Druckelements 1 dichte) Membran 20 angeordnet, die eine Öffnung 35 aufweist.

Bei einer positiven Druckänderung des das Druckelement 1 umgebenden Fluids wird die Balgstruktur 34 zusammengedrückt (in axialer Richtung in FIG 4). Der Druck in einem Inneren der zweiten Kammer 5 nimmt zu. Die Öffnung 35 in der Membran 20 ermöglicht eine Druckausgleichsströmung in Richtung der ersten Kammer 4. Bei einer ausreichend hohen Druckänderungsrate (bei einem starken Druckstoß) ist der Strömungswiderstand der Öffnung 35 so groß, dass die Membran 20 in Richtung der ersten Kammer 4 ausgelenkt wird.

Die Membran 20 wiederum ist mechanisch mit einem als MEMS-basierten Schalter 36 (MEMS = Mikro-Elektro-mechanischer Schalter) ausgebildeten Schaltelement verbunden. Bewegt sich die Membran 20 in Richtung des MEMS-basierten Schalters 36, so wird dieser derart ausgelenkt, dass der Schalter 36 einen elektrischen Schaltkreis 19 schließt. Gleichzeitig dient diese Stellung des Schalters 36 bzw. eine Halterung 41 (in FIG 4 nicht dargestellt) des Schalters 36 als Überlastvorrichtung 41 bzw. als mechanischer Anschlag, der eine weitere (schädigende) Auslenkung der Membran 20 verhindert.

Nachdem die Druckausgleichsströmung abgeklungen ist, geht die Membran 20 wieder zurück in ihre Ruhelage, wodurch der elektrische Schaltkreis 19 wieder unterbrochen bzw. geöffnet wird. Das Fluid im Inneren des Druckelements 1 kann unter einem entsprechend hohen Druck stehen, um den Arbeitsbereich des Druckelements 1 der jeweiligen Anwendung anpassen zu können.

Durch eine Anordnung des MEMS-Schalters 36 auf der anderen Seite der Membran 20 kann auch eine negative Druckänderung erfasst werden.

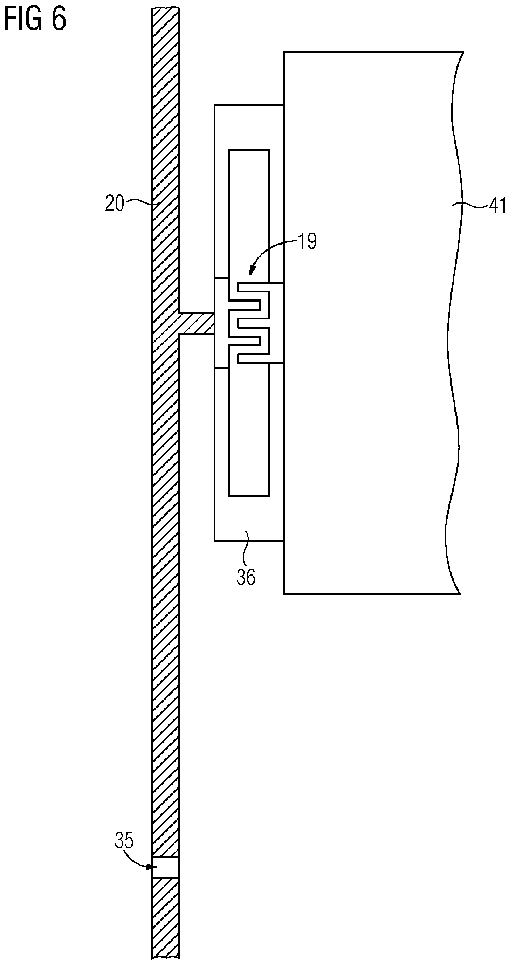

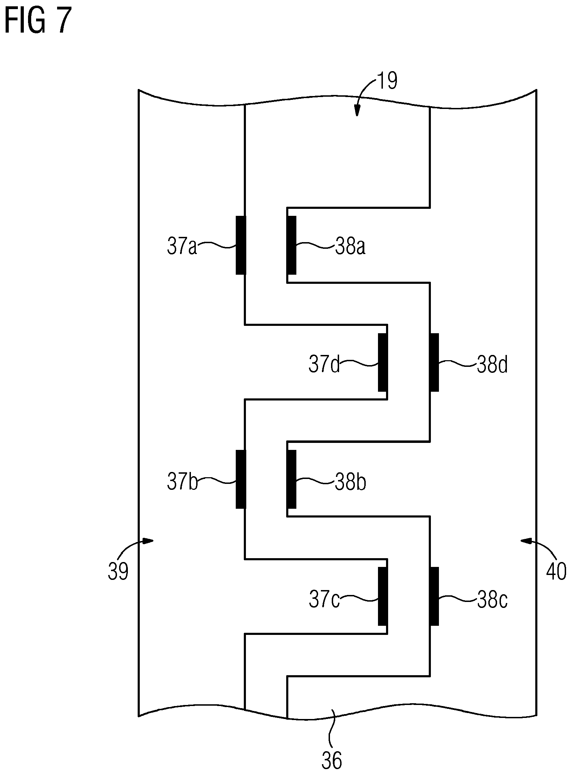

In FIG 5 ist eine andere Perspektive des Druckelements 1 aus FIG 4 dargestellt (um 90 Grad um die Längsachse rotiert). FIG 6 zeigt einen MEMS-Schalter 36 zur Verwendung für das Druckelement 1 im Detail. Gut zu erkennen ist, dass die Membran 20 direkt mit dem Schalter 36 verbunden ist, um bei entsprechender Auslenkung der Membran 20 einen elektrischen Schaltkreis 19 zu schließen. Der MEMS-Schalter 36 ist an einer Halterung 41 befestigt. Der elektrische Schaltkreis 19 ist in FIG 7 exemplarisch abgebildet. Er umfasst vier Kontakte 37a, 37b, 37c, 37d auf einer ersten Seite 39 (links in FIG 7) und vier Gegenkontakte 38a, 38b, 38c, 38d auf einer rechten Seite 40 (rechts in FIG 7).

In FIG 8 ist eine fluiddurchströmbare Rohrleitung 12 dargestellt, die mit einem erfindungsgemäßen Druckelement 1 fluidisch verbunden ist.

## Patentansprüche

1. Druckstoßtaster (1) zur Überwachung eines durch eine Rohrleitung (12) strömenden und den Druckstoßtaster (1) beaufschlagenden Fluids, der ein Gehäuse (2) aus einem robusten, druckfesten Material aufweist, wobei sich in dem Gehäuse (2) wenigstens eine erste Kammer (4) und eine zweite Kammer (5) befinden, wobei die erste Kammer (4) eine erste Öffnung (3, 13, 35) und die zweite Kammer (5) eine zweite Öffnung (14, 32, 34) aufweisen, über welche Öffnungen (3, 13, 14, 32, 34, 35) ein Druck in den Kammern (4, 5) durch das den Druckstoßtaster (1) beaufschlagende Fluid beeinflussbar ist, wobei sich ein Querschnitt der ersten Öffnung (3, 13, 35) von einem Querschnitt der zweiten Öffnung (14, 32, 34) unterscheidet, und wobei sich in einem Inneren des Gehäuses (2) eine kompressible Verformeinrichtung (18) befindet, die bei einer Druckänderung innerhalb des Gehäuses (2) eine entsprechende Volumenänderung erfährt, und wobei in dem Inneren des Gehäuses (2) ein elektrischer Schaltkreis (19) angeordnet ist, und wobei der Druckstoßtaster (1) wenigstens eine flexible Membran (7, 8, 20) aufweist, die eine Verbindung zu einem in dem Inneren des Gehäuses (2) angeordneten Schaltelement (9, 23, 24, 36) aufweist, derart, dass eine Bewegung der Membran (7, 8, 20) zu einer Bewegung des Schaltelements (9, 23, 24, 36) führt, um bei einer entsprechenden Bewegung der Membran (7, 8, 20), bedingt durch eine Überschreitung eines betragsmäßigen Schwellwertes einer Änderung eines Drucks, den das Fluid auf den Druckstoßtaster (1) ausübt, unabhängig von einem Absolutwert des Drucks den elektrischen Schaltkreis (19) zu schließen, wobei die Membran zwischen der ersten Kammer (4) und der zweiten Kammer (5) angeordnet ist und die beiden Kammern (4, 5) fluidisch voneinander trennt.

2. Druckstoßtaster (1) zur Überwachung eines durch eine Rohrleitung (12) strömenden und den Druckstoßtaster (1) beaufschlagenden Fluids, der ein Gehäuse (2) aus einem robusten, druckfesten Material aufweist, wobei ein Teil des Gehäuses (2) als Balgstruktur (34) ausgebildet ist, wobei die Balgstruktur als kompressible Verformeinrichtung (18) fungiert, die bei einer Druckänderung eines den Druckstoßtaster (2) umgebenden Fluids eine entsprechende Volumenänderung erfährt, und wobei in dem Inneren des Gehäuses (2) ein elektrischer Schaltkreis (19) angeordnet ist, und wobei der Druckstoßtaster (1) wenigstens eine flexible Membran (7, 8, 20) aufweist, die eine Verbindung zu einem in dem Inneren des Gehäuses (2) angeordneten Schaltelement (9, 23, 24, 36) aufweist, derart, dass eine Bewegung der Membran (7, 8, 20) zu einer Bewegung des Schaltelements (9, 23, 24, 36) führt, um bei einer entsprechenden Bewegung der Membran (7, 8, 20), bedingt durch eine Überschreitung eines betragsmäßigen Schwellwertes einer Änderung eines Drucks, den das Fluid auf den Druckstoßtaster (1) ausübt, unabhängig von einem Absolutwert des Drucks den elektrischen Schaltkreis (19) zu schließen.

3. Druckstoßtaster (1) nach Anspruch 1 oder 2, der dazu ausgebildet ist, den elektrischen Schaltkreis (19) automatisch bei Auftreten der Druckänderung des Fluids ohne Zuhilfenahme einer externen, insbesondere elektrischen Energiequelle zu schließen.

4. Druckstoßtaster (1) nach einem der vorangegangenen Ansprüche, der eine erste flexible Membran (7) aufweist, die eine Verbindung zu einem ersten Schaltelement (23) aufweist, derart, dass aufgrund einer positiven Druckänderung des Fluids die erste Membran (7) und das erste Schaltelement (23) derart bewegt werden, dass der elektrische Schaltkreis (19) geschlossen wird,
und der eine zweite flexible Membran (8) aufweist, die eine Verbindung zu einem zweiten Schaltelement (24) aufweist, derart, dass aufgrund einer negativen Druckänderung des Fluids die zweite Membran (8) und das zweite Schaltelement (24) derart bewegt werden, dass der elektrische Schaltkreis (19, 25, 26) geschlossen wird.

5. Druckstoßtaster (1) nach einem der vorangegangenen Ansprüche, der eine Überlastvorrichtung (16, 21, 22, 41) umfasst, die dazu ausgebildet ist, eine übermäßige mechanische Belastung auf die wenigstens eine Membran (7, 8, 20, 27) zu verhindern.

6. Druckstoßtaster (1) nach einem der vorangegangenen Ansprüche, der wenigstens eine erste Kammer (4) und eine zweite Kammer (5) aufweist, wobei die Membran (7, 8, 20) und das Schaltelement (9, 23, 24, 36) in einem mittleren Bereich zwischen den beiden Kammern (4, 5) angeordnet sind.

7. Druckstoßtaster (1) nach Anspruch 6, der wenigstens eine zusätzliche dritte Kammer (6) aufweist, die eine erste Öffnung (13) zu der ersten Kammer (4) und eine zweite Öffnung (14) zu der zweiten Kammer (5) aufweist, wobei die beiden Öffnungen (13, 14) einen sich voneinander unterscheidenden Strömungsquerschnitt aufzuweisen.

8. Druckstoßtaster (1) nach Anspruch 6, bei dem die Membran (7, 8, 20) eine Öffnung (35) zur Durchströmung mit einem Fluid aufweist.

9. Druckstoßtaster (1) nach einem der Ansprüche 6 bis 8, bei dem in der ersten Kammer (4) eine kompressible Verformeinrichtung (18) angeordnet ist, die dazu ausgebildet ist, ihr Volumen abhängig von einem auf sie ausgeübten Druck reversibel zu ändern.

10. Druckstoßtaster (1) nach Anspruch 9, bei dem die kompressible Verformeinrichtung (18) ein Verformkörper ist.

11. Druckstoßtaster (1) nach Anspruch 9, bei dem die kompressible Verformeinrichtung (18) eine von der ersten Kammer (4) aus Strömungssicht getrennte Teilkammer (28) aufweist, die eine Feder (29) und einen Kolben (30) umfasst, wobei der Kolben (30) dazu ausgebildet und vorgesehen ist, bei einem auf ihn ausgeübten Druck eine Kraft auf die Feder (29) auszuüben, so dass das Volumen der Teilkammer (28) und damit der gesamten Verformeinrichtung (18) reversibel verändert wird.

12. Druckstoßtaster (1) nach einem der vorangegangenen Ansprüche, der eine flexible Trennmembran (27) aufweist, derart, dass eine erste Seite der Trennmembran (27) mit dem Fluid beaufschlagbar ist, und eine zweite Seite der Trennmembran (27) mit einem innerhalb des Druckelements (1) befindlichen Fluid beaufschlagt ist.

13. Rohrleitung (12), die von einem Fluid durchströmbar ist, und die wenigstens einen mit der Rohrleitung (12) verbundenen Druckstoßtaster (1) nach einem der vorangegangenen Ansprüche aufweist.

14. Druckstoßdetektionseinheit, umfassend einen Druckstoßtaster (1) nach einem der Ansprüche 1 bis 12, und eine Steuereinheit, die zu einer Erfassung einer Schließung des elektrischen Schaltkreises (19) des Druckstoßtasters (1) ausgebildet und vorgesehen ist.

15. Druckstoßüberwachungssystem für fluiddurchströmbare Rohrleitungen (12), umfassend eine Mehrzahl an Druckstoßtastern (1) gemäß einem der Ansprüche 1 bis 14 und wenigstens eine Steuereinheit, die zu einer Erfassung einer Schließung des elektrischen Schaltkreises (19) des Druckstoßtasters (1) ausgebildet und vorgesehen ist.

16. Verwendung wenigstens eines Druckstoßtasters (1) gemäß einem der Ansprüche 1 bis 12 zur Überwachung einer fluiddurchströmten Rohrleitung (12).

## Claims

1. Pressure surge sensing device (1) for monitoring a fluid that flows through a pipeline (12) and is applied to the pressure surge sensing device (1), which pressure surge sensing device (1) has a housing (2) made of a robust, pressure-proof material, wherein at least a first chamber (4) and a second chamber (5) are situated in the housing (2), wherein the first chamber (4) has a first opening (3, 13, 35) and the second chamber (5) has a second opening (14, 32, 34), via which openings (3, 13, 14, 32, 34, 35) a pressure can be influenced into the chambers (4, 5) by way of the fluid that is applied to the pressure surge sensing device (1), wherein a cross-section of the first opening (3, 13, 35) differs from a cross-section of the second opening (14, 32, 34), and wherein a compressible deforming facility (18) is situated in an interior of the housing (2), which compressible deforming facility (18), on a change in pressure within the housing (2), experiences a corresponding change in volume, and wherein an electrical circuit (19) is arranged in the interior of the housing (2), and wherein the pressure surge sensing device (1) has at least one flexible diaphragm (7, 8, 20), which has a connection to a switching element (9, 23, 24, 36) arranged in the interior of the housing (2) such that a movement of the diaphragm (7, 8, 20) leads to a movement of the switching element (9, 23, 24, 36) in order to close the electrical circuit (19) on a corresponding movement of the diaphragm (7, 8, 20) that is caused by an exceeding of a threshold value according to amount of a change in a pressure which the fluid exerts on the pressure surge sensing device (1), independently of an absolute value of the pressure, wherein the diaphragm is arranged between the first chamber (4) and the second chamber (5) and fluidically separates the two chambers (4, 5) from one another.

2. Pressure surge sensing device (1) for monitoring a fluid that flows through a pipeline (12) and is applied to the pressure surge sensing device (1), which pressure surge sensing device (1) has a housing (2) made of a robust, pressure-proof material, wherein some of the housing (2) is embodied as a bellows structure (34), wherein the bellows structure functions as a compressible deforming facility (18) which, on a change in pressure of a fluid surrounding the pressure surge sensing device (2), experiences a corresponding change in volume, and wherein an electrical circuit (19) is arranged in the interior of the housing (2), and wherein the pressure surge sensing device (1) has at least one flexible diaphragm (7, 8, 20), which has a connection to a switching element (9, 23, 24, 36) arranged in the interior of the housing (2) such that a movement of the diaphragm (7, 8, 20) leads to a movement of the switching element (9, 23, 24, 36) in order to close the electrical circuit (19) on a corresponding movement of the diaphragm (7, 8, 20) that is caused by an exceeding of a threshold value according to amount of a change in a pressure which the fluid exerts on the pressure surge sensing device (1), independently of an absolute value of the pressure.

3. Pressure surge sensing device (1) according to claim 1 or 2, which is embodied to close the electrical circuit (19) automatically when the change in pressure of the fluid occurs, without utilising an external, in particular electrical energy source.

4. Pressure surge sensing device (1) according to one of the preceding claims, which has a first flexible diaphragm (7), which has a connection to a first switching element (23) such that, as a result of a positive change in pressure of the fluid, the first diaphragm (7) and the first switching element (23) are moved such that the electrical circuit (19) is closed,
and has a second flexible diaphragm (8), which has a connection to a second switching element (24) such that, as a result of a negative change in pressure of the fluid, the second diaphragm (8) and the second switching element (24) are moved such that the electrical circuit (19, 25, 26) is closed.

5. Pressure surge sensing device (1) according to one of the preceding claims, which comprises an overload apparatus (16, 21, 22, 41), which is embodied to prevent an excess mechanical loading on the at least one diaphragm (7, 8, 20, 27).

6. Pressure surge sensing device (1) according to one of the preceding claims, which has at least a first chamber (4) and a second chamber (5), wherein the diaphragm (7, 8, 20) and the switching element (9, 23, 24, 36) are arranged in a central region between the two chambers (4, 5).

7. Pressure surge sensing device (1) according to claim 6, which has at least one additional third chamber (6), which has a first opening (13) to the first chamber (4) and a second opening (14) to the second chamber (5), wherein the two openings (13, 14) have a flow cross-section which differs from one another.

8. Pressure surge sensing device (1) according to claim 6, in which the diaphragm (7, 8, 20) has an opening (35) for a fluid to flow through.

9. Pressure surge sensing device (1) according to one of claims 6 to 8, in which arranged in the first chamber (4) is a compressible deforming facility (18), which is embodied to reversibly change its volume as a function of a pressure exerted upon it.

10. Pressure surge sensing device (1) according to claim 9, in which the compressible deforming facility (18) is a deforming body.

11. Pressure surge sensing device (1) according to claim 9, in which the compressible deforming facility (18) has a subchamber (28) which is separated from the first chamber (4) from a flow perspective and comprises a spring (29) and a piston (30), wherein the piston (30) is embodied and provided to exert a force on the spring (29) when a force is exerted upon it, so that the volume of the subchamber (28) and thus of the overall deforming facility (18) is reversibly altered.

12. Pressure surge sensing device (1) according to one of the preceding claims, which has a flexible separating diaphragm (27), which is embodied such that the fluid is able to be applied to a first side of the separating diaphragm (27), and a fluid situated within the pressure element (1) is applied to a second side of the separating diaphragm (27).

13. Pipeline (12), through which a fluid is able to flow, and which has at least one pressure surge sensing device (1) according to one of the preceding claims, which is connected to the pipeline (12).

14. Pressure surge detection unit, comprising a pressure surge sensing device (1) according to one of claims 1 to 12 and a control unit, which is embodied and provided for recording a closing of the electrical circuit (19) of the pressure surge sensing device (1).

15. Pressure surge monitoring system for pipelines (12) through which fluid can flow, comprising a plurality of pressure surge sensing devices (1) according to one of claims 1 to 14 and at least one control unit, which is embodied and provided for recording a closing of the electrical circuit (19) of the pressure surge sensing device (1).

16. Use of at least one pressure surge sensing device (1) according to one of claims 1 to 12 for monitoring a pipeline (12) through which fluid flows.

## Revendications

1. Détecteur (1) de coup de bélier pour le contrôle d'un fluide, qui passe dans une canalisation (12) et auquel le détecteur (1) de coup de bélier est soumis, qui a une enveloppe (2) en un matériau robuste, résistant à la pression, dans lequel dans l'enveloppe (2) se trouvent au moins une première chambre (4) et une deuxième chambre (5), la première chambre (5) ayant une première ouverture (3, 13, 35) et la deuxième chambre (5) une deuxième ouverture (14, 32, 34), par lesquelles ouvertures (3, 13, 14, 32, 34, 35) une pression dans les chambres (4, 5) peut être influencée par le fluide auquel le détecteur (1) de coup de bélier est soumis, une section transversale de la première ouverture (3, 13, 35) étant différente d'une section transversale de la deuxième ouverture (14, 32, 34), et dans lequel à l'intérieur de l'enveloppe (2) se trouve un dispositif (18) compressible de déformation, qui, lorsqu'il se produit une variation de la pression à l'intérieur de l'enveloppe (2), subit une variation de volume correspondante, et dans lequel un circuit (19) électrique est disposé à l'intérieur de l'enveloppe (2), et dans lequel le détecteur (1) de coup de bélier a au moins une membrane (7, 8, 20) souple, qui a une liaison à un élément (9, 23, 24, 36) de coupure disposé à l'intérieur de l'enveloppe (2) de manière à ce qu'un déplacement de la membrane (7, 8, 20) entraîne un déplacement de l'élément (9, 23, 24,36) de coupure afin, pour un déplacement correspondant de la membrane (7, 8, 20) dû à un dépassement d'une valeur de seuil en valeur absolue d'une variation d'une pression, que le fluide applique au détecteur (1) de coup de bélier, de fermer le circuit (19) électrique indépendamment d'une valeur absolue de la pression, dans lequel la membrane est disposée entre la première chambre (4) et la deuxième chambre (5) et sépare les deux chambres (4, 5) fluidiquement l'une de l'autre.

2. Détecteur (1) de coup de bélier pour le contrôle d'un fluide, qui passe dans une canalisation (12) et auquel le détecteur (1) de coup de bélier est soumis, qui a une enveloppe (2) en un matériau robuste, résistant à la pression, une partie de l'enveloppe (2) étant constituée sous la forme d'une structure (34) à soufflet, dans lequel la structure à soufflet fonctionne comme dispositif (8) compressible de déformation qui, pour une variation de pression d'un fluide entourant le détecteur (2) de coup de bélier subit une variation de volume correspondante, et dans lequel un circuit (19) électrique est disposé à l'intérieur de l'enveloppe (2), et dans lequel le détecteur (1) de coup de bélier a au moins une membrane (7, 8, 20) souple, qui a une liaison à un élément (9, 23, 24, 36) de coupure disposé à l'intérieur de l'enveloppe (2) de manière à ce qu'un déplacement de la membrane (7, 8, 20) entraîne un déplacement de l'élément (9, 23, 24, 36) de coupure afin, pour un déplacement correspondant de la membrane (7, 8, 20), dû à un dépassement d'une valeur de seuil en valeur absolue d'une variation d'une pression, que le fluide applique au détecteur (1) de coup de bélier, de fermer le circuit (19) électrique indépendamment d'une valeur absolue de la pression.

3. Détecteur (1) de coup de bélier suivant la revendication 1 ou 2, qui est constitué pour fermer le circuit (19) électrique automatiquement à l'apparition de la variation de pression du fluide sans l'aide d'une source d'énergie extérieure, notamment électrique.

4. Détecteur (1) suivant l'une des revendications précédentes, qui a une membrane (7) souple, qui a une liaison à un premier élément (23) de coupure, de manière à ce que, en raison d'une variation de pression positive du fluide, la première membrane (7) et le premier élément (23) de coupure soient déplacés, de façon à fermer le circuit (19) électrique, et qui a une deuxième membrane (8) souple, qui a une liaison à un deuxième élément (24) de coupure de manière à ce que, en raison d'une variation de pression négative du fluide, la deuxième membrane (8) et le deuxième élément (24) de coupure soient déplacés de façon à fermer le circuit (19, 25, 26) électrique.

5. Détecteur (1) suivant l'une des revendications précédentes, qui comprend un système (16, 21, 22, 41) de surcharge, qui est constitué pour empêcher une charge mécanique excédentaire sur la au moins une membrane (7, 8, 20, 27) .

6. Détecteur (1) suivant l'une des revendications précédentes, qui a au moins une première chambre (4) et une deuxième chambre (5), dans lequel la membrane (7, 8, 20) et l'élément (9, 23, 24,36) de coupure sont disposés dans une région médiane entre les deux chambres (4, 5).

7. Détecteur (1) suivant la revendication 6, qui a au moins une troisième chambre (6) supplémentaire, qui a une première ouverture (13) menant à la première chambre (4) et une deuxième ouverture (14) menant à la deuxième chambre (5), les deux ouvertures (13, 14) ayant une section transversale d'écoulement différente l'une de l'autre.

8. Détecteur (1) suivant la revendication 6, dans lequel la membrane (7, 8, 20) a une ouverture (35) pour le passage d'un fluide.

9. Détecteur (1) suivant l'une des revendications 6 à 8, dans lequel dans la première chambre (4) est disposé un dispositif compressible de déformation, qui est constitué pour modifier son volume de manière réversible en fonction d'une pression qui lui est appliquée.

10. Détecteur (1) suivant la revendication 9, dans lequel le dispositif (18) compressible de déformation est un corps de déformation.

11. Détecteur (1) suivant la revendication 9, dans lequel le dispositif (18) compressible de déformation a une chambre (28) partielle séparée de la première chambre (4) du point de vue de l'écoulement, qui comprend un ressort (29) et un piston (30), le piston (30) étant constitué et prévu pour appliquer, si une pression lui est appliquée, une force au ressort (29) de manière à modifier réversiblement le volume de la chambre (28) partiel et ainsi tout le dispositif (18) de déformation.

12. Détecteur (1) suivant l'une des revendications précédentes, qui a une membrane (27) souple de séparation, de manière à ce qu'une première face de la membrane (27) de séparation puisse être soumise au fluide et qu'une deuxième face de la membrane (27) de séparation puisse être soumise à un fluide se trouvant à l'intérieur de l'élément (1) détecteur de coup de bélier.

13. Canalisation (12), dans laquelle peut passer un fluide et qui a au moins un détecteur (1) de coup de bélier suivant l'une des revendications précédentes relié à la canalisation (12) .

14. Unité de détection de coup de bélier, comprenant un détecteur (1) de coup de bélier suivant l'une des revendications 1 à 12 et une unité de commande, qui est constituée et prévue pour une détection d'une fermeture du circuit (19) électrique du détecteur (1) de coup de bélier.

15. Système de contrôle de coup de bélier pour des canalisations (12) dans lesquelles passe du fluide, comprenant une pluralité de détecteurs (1) de coup de bélier suivant l'une des revendications 1 à 14, est au moins une unité de commande, qui est constituée et prévue pour une détection d'une fermeture du circuit (19) électrique du détecteur (1) de coup de bélier.

16. Utilisation d'au moins un détecteur (1) de coup de bélier suivant l'une des revendications 1 à 12, pour le contrôle d'une canalisation (12), dans lequel passe du fluide.
